# EUROPEAN PATENT APPLICATION

(11) **EP 3 130 235 A1**
(43) Date of publication of application: **15.02.2017**
(21) Application number: 15769370.6
(22) Date of filing: 11.03.2015
(51) Int. Cl.: A23L 27/40

(54) **MACROMINERAL COMPOUND FOR CULINARY USE**

(30) Priority: 28.03.2014 ES 201400270
(71) Applicant: Escudero Alcaraz, Pedro, 30730 - San Javier Murcia (ES)
(72) Inventor: Escudero Alcaraz, Pedro, 30730 - San Javier Murcia (ES)
(74) Representative: Herrero Herranz, Eva
(86) International application number: PCT/ES2015/000035
(87) International publication number: WO 2015/144946

(57) **Abstract**

A description is given of a compound based on a mixture of macrominerals for culinary use that enables the manufacture of artificial seawater and the manufacture of salts for seasoning food directly once the compound has been mixed with common salt. The compound consists of a main base formed by magnesium chloride and potassium chloride, to which different combinations of sodium sulphate, calcium chloride and sodium bicarbonate or sodium sulphate and tricalcium phosphate or magnesium sulphate and tricalcium phosphate are added.

## Description

### OBJECT OF THE INVENTION

The present invention refers to a mixture of macrominerals for culinary use, where said mixture is a compound with optimal properties for use in cooking, either added to water for the manufacture of seawater or for use as seasoning applied directly to food.

The compound for direct application to food affords the food organoleptic properties similar to those obtained by cooking it in seawater, with the obvious advantage of not needing said operation, greatly simplifying the cooking process. Furthermore, several alternatives of the compound are presented, where the alternative for mixing with freshwater to manufacture artificial seawater results in a solution with organoleptic properties similar to those of seawater, having the advantage over water obtained directly from the sea of not requiring medical analysis to ensure its safety, as well as the ability to control the salt content of the final solution based on the use it is to be given.

### BACKGROUND OF THE INVENTION

Macrominerals are inorganic substances belonging to the group of minerals present in food and essential for the proper functioning of the human body. The most important macrominerals from a nutritional point of view are calcium, phosphorus, sodium, magnesium, chlorine, potassium and sulphur. The human body may need these macrominerals to varying degrees, but the required daily intake exceeds 100 mg in all cases. The way to obtain them is through a varied diet that includes meat, vegetables and fruit, where the lack of these essential macrominerals in the body can lead to major health problems. That is why a salt compound including all or many of these macrominerals will offer significant benefits for consumers. By contrast, the consumption of normal seawater will not report these benefits because of its very composition, very low in some of the aforementioned macrominerals.

Furthermore, a compound of macrominerals that could be used without having to dilute them in water but which provides nutritional benefits and the organoleptic properties of seawater could be used as a substitute for table salt, almost exclusively composed of NaCl (sodium chloride), where excess sodium in the body is known to be a major health hazard.

The holder of the present report is not aware of the existence of any compound of macrominerals that provides the organoleptic properties of seawater when applied dry on food or that can be diluted with fresh water for culinary use to give the flavour of seawater to said food.

### DESCRIPTION OF THE INVENTION

The following is a description of the alternatives that may arise from the formulation of the compound of macrominerals of the present invention. All the compositions described below refer to percentages by weight.

The main base of the compound proposed is a combination of magnesium chloride and potassium chloride, where the proportion of said components in the final formulation of the compound is variable depending on the end use of the compound, but within the following ranges in all cases:
- Magnesium chloride [34.34-51.91 %]
- Potassium chloride [4.29-5.97%]

Where the percentages indicated refer to the final total of the compound formed (i.e. if the maximum of both components is used, the main base will form 57.91% of the total compound). This main base gives the option of incorporating different combinations of macrominerals to obtain a final compound designed to afford food organoleptic properties similar to those obtained by using seawater, but with different properties depending on the combination added.

Thus, adding a combination of sodium sulphate, calcium chloride and sodium bicarbonate obtains a compound suitable for dilution in fresh water, providing, as indicated, optimal organoleptic properties to the food cooked in the solution created.

More specifically, the ranges within which these macrominerals are incorporated will be as follows:
- Sodium sulphate [33.36-40.37%]
- Calcium chloride [9.00-10.89%]
- Sodium bicarbonate [1.44-1.74%]

The composition formed by the main base described above and this combination, subsequently mixed with sodium chloride in a ratio of 40 to 75% by weight, is adequate for culinary use once diluted in water. The average amount of salt in seawater (since this amount varies depending on each area) is approximately 36 g of salt per litre of water. The preparation made using the formulation indicated above must therefore have an amount of salt per litre similar to said values; however, it may be varied as desired to increase or reduce the effect caused on food. The recommended amount is between 20 and 40 g of salt per litre of water.

The preparation of compounds of macrominerals suitable for direct intake without dilution in water is achieved by adding to the main base a new combination consisting of sodium sulphate and tricalcium phosphate. This obtains a valid nutritional supplement suitable for seasoning and directly enriches food. The ranges of the compounds forming this combination will be:
- Sodium sulphate [33.89-41.00%]
- Tricalcium phosphate [9.14-11.06%]

It must then be mixed with common salt in a percentage of 40 to 75% by weight to obtain salt for direct application to food with low sodium content and to give the "flavour of the sea" to the food.

Finally, it is possible to prepare an alternative using magnesium sulphate and tricalcium phosphate to obtain a salt for direct application on food with minimal sodium content, using said compounds within the following ranges:
- Magnesium sulphate [43.31-52.40%]
- Tricalcium phosphate [8.97-10.85%]

The food can be solid, liquid or gaseous and also across the full range of intermediate forms. For this reason, different formulations are proposed, adequate for use undiluted in order to enrich food with macrominerals or for direct intake as a nutritional supplement and other uses more adequate for achieving the same goals in the diluted form. In other types of use, they are all used in solution and applied with sprays or atomizers. They can be mixed with sodium chloride in different ratios to obtain low-sodium seasonings enriched with macrominerals whose suitability for use with each form of food corresponds to the indications given above for each of the formulations described.

### EXAMPLE OF THE INVENTION

The following is a description of various embodiments of the compound explained in this report without limitation as to its formal constitution or small variants that are unimportant in terms of the modification of its primary function. In addition, all the variants indicated in the main patent or in additional certificates of said patent will apply to the description given here.

For the preparation of a compound of macrominerals for the manufacture of seawater, the following formulation is given, based on combinations of the main base expressed above:
- Magnesium chloride ............... 46.48%
- Sodium sulphate ...................... 36.70%
- Calcium chloride ...................... 9.90
- Potassium chloride ..................... 5.35
- Sodium Bicarbonate .................... 1.58%.

The compound obtained will then be mixed in a proportion of 50% of common salt and finally dissolved in fresh water to obtain a concentration of 30 g of salt, ready for culinary use.

When preparing the compound for direct use undiluted, the amounts used will be:
- Magnesium chloride ................ 47.22%
- Sodium sulphate .................... 37.28%.
- Tricalcium phosphate ................... 10.06%
- Potassium chloride ..................... 5.43%

Where the compound obtained will then be mixed in a proportion of 40% of common salt and said mixture will be ready for direct use as food seasoning.

Finally, the combination of the main base for obtaining the compound for direct use on food with low sodium content will be:
- Magnesium sulphate ................. 47.64%
- Magnesium chloride ................ 37.77%
- Tricalcium phosphate ................... 9.87%
- Potassium chloride ..................... 4.72%

Where, as in the previous case, the compound obtained will then be mixed in a proportion of 40% of common salt, ready for direct use as food seasoning.

Having sufficiently described the nature of the present invention, as well as its embodiment, it is hereby recorded that it may essentially be used in other embodiments that differ in detail from that indicated by way of example, also to be covered by the protection being claimed provided they do not alter, change or modify its fundamental principle.

## Claims

1. COMPOUND OF MACROMINERALS FOR CULINARY USE **characterised by** the fact that it is composed of a main base made up of
- Magnesium chloride [34.34-51.91 %]
- Potassium chloride [4.29-5.97%]
where the following is added to said main base:
- Sodium sulphate [33.36-40.37%]
- Calcium chloride [9.00-10.89%]
- Sodium bicarbonate [1.44-1.74%]
Or:
- Sodium sulphate [33.89-41.00%]
- Tricalcium phosphate [9.14-11.06%]
Or:
- Magnesium sulphate [39.07-52.40%]
- Tricalcium phosphate [4.73-10.85%]
Where the compound obtained is mixed with common salt in a variable percentage of between 40 and 75% by weight of the mixture.

2. COMPOUND OF MACROMINERALS FOR CULINARY USE according to claim 1, **characterised by** the fact that the compound is made up of:
- Magnesium chloride [34.34-51.91 %]
- Potassium chloride [4.29-5.97%]
- Sodium sulphate [33.36-40.37%]
- Calcium chloride [9.00-10.89%]
- Sodium bicarbonate [1.44-1.74%]
once mixed with common salt in the indicated percentage, it is diluted in fresh water to obtain a solution with between 20 to 40 g of salt per litre of water used.

3. COMPOUND OF MACROMINERALS FOR CULINARY USE, according to claims 1 and 2, **characterised by** the fact that the mixture obtained, as a solution or as a dry salt, is treated using vaporisers or atomisers for consumption:
